# EUROPÄISCHE PATENTSCHRIFT

(11) **EP 2 624 680 B1**
(45) Veröffentlichungstag und Bekanntmachung des Hinweises auf die Patenterteilung: **02.11.2016**
(21) Anmeldenummer: 10762690.5
(22) Anmeldetag: 07.10.2010
(51) Int. Cl.: A01G 3/06

(54) **GARTENSCHNEIDGERÄT**
GARDEN CUTTING APPLIANCE
SÉCATEUR DE JARDIN

(43) Veröffentlichungstag der Anmeldung: 14.08.2013
(73) Patentinhaber: HUSQVARNA AB, 561 82 Huskvarna (SE)
(72) Erfinder: KOHL, Peter, 89257 Illertissen (DE)
(74) Vertreter: Finkele, Rolf
(86) Internationale Anmeldenummer: PCT/EP2010/065039
(87) Internationale Veröffentlichungsnummer: WO 2012/045361

(56) Entgegenhaltungen:
- EP-A1- 1 884 156
- EP-A1- 1 886 551
- DE-U1-202006 018 090

## Beschreibung

Die Erfindung betrifft ein motorisch angetriebenes Gartenschneidgerät mit einem Handgriff, welcher insbesondere zur einhändigen Handhabung des Gartenschneidgeräts ausgebildet ist.

Bei handgehaltenen Gartenschneidgeräten mit motorisch oszillierend angetriebener Messeranordnung, welche im Betrieb unterschiedliche Ausrichtungen einer Messeranordnung relativ zum Benutzer bedingen, kann vorgesehen sein, einen Handgriff relativ zu der Messeranordnung bzw. einer durch diese bestimmten Schneidebene veränderlich ausrichtbar mit der Messeranordnung zu verbinden. Hierzu kann insbesondere ein Schwenkgelenk zwischen der Messeranordnung und dem Handgriff vorgesehen sein. Beispielsweise ist bei motorbetriebenen Heckenscheren bekannt, einen Handgriff relativ zu dem Messerbalken um eine zur Längsrichtung des Messerbalken parallele erste Schwenkachse und/oder um eine zu dieser Längsrichtung senkrecht und zur Schneidebene parallele zweite Schwenkachse zu verschwenken. Bei der Verschwenkung um die genannte zweite Schwenkachse sind zulässige Betriebsstellungen aus Sicherheitsgründen auf einen Schwenkbereich von maximal 90° gegen eine von dem Handgriff weg gerichtete Geradeausstellung des Messerbalkens beschränkt.

Auch bei motorisch angetriebenen Gras-, Strauch- oder Buschscheren sind bezüglich der Lage relativ zur Schneidebene gleichartige Schwenkachsen bekannt.

Der vorliegenden Erfindung liegt die Aufgabe zugrunde, ein handgehaltenes, motorisch angetriebenes Gartenschneidgerät mit weiter verbesserter Handhabbarkeit anzugeben.

Die Erfindung ist im unabhängigen Anspruch 1 beschrieben. Die abhängigen Ansprüche enthalten vorteilhafte Ausgestaltungen und Weiterbildungen der Erfindung.

Die erfindungsgemäße Verlagerbarkeit des Handgriffs zwischen wenigstens zwei Betriebsstellungen um eine zur Schneidebene der Messeranordnung annähernd senkrechte Schwenkachse ergibt innerhalb eines Gartenschneidgeräts mit motorischem Antrieb der Messeranordnung neben einer besonders gebräuchlichen Betriebsstellung mit bezüglich der Schwenkachse von der Messeranordnung weg gerichteten Handgriff eine weitere vorteilhafte Betriebsstellung mit in Richtung der Messeranordnung weisendem Handgriff.

Insbesondere bei einer bevorzugten Ausbildung des Handgriffs in der Art, dass bei einer für die Handhabung des Geräts im Betrieb vorgesehenen Greifposition des Handgriffs durch eine Benutzerhand die Schwenkachse auf der Daumenseite der Benutzerhand und damit auf der dem Benutzerarm abgewandten Seite der Benutzerhand liegt, ergibt sich in der zweiten Betriebsstellung des Handgriffs eine Art ziehende Arbeitsbewegung des Schneidgeräts beim fortschreitenden Schneidvorgang, was eine für viele Situationen ergonomische Haltung des Benutzers erlaubt. Dies ist insbesondere von Bedeutung bei Gartenschneidgeräten, deren Messeranordnung wenigstens eine zum Schneiden schließbare Messerlücke zwischen zwei Messern der Messeranordnung mit im wesentlichen radial von der Schwenkachse weg weisender Lückenöffnung aufweist. Die Ausrichtung der Lückenöffnung gibt eine Arbeitsrichtung für einen fortschreitenden Schneidvorgang vor.

Bei der Arbeitsweise mit der ziehenden Bewegung des Arbeitsgeräts beim fortschreitenden Schneidvorgang können vorteilhafterweise auch abgeschnittene Pflanzenteile gleichzeitig mit der Arbeitsbewegung aus dem Schneidbereich entfernt werden.

In vorteilhafter Weiterbildung können weitere Betriebsstellungen des Handgriffs relativ zu der Messeranordnung vorgesehen sein, bei welchen der Handgriff unterschiedliche Winkelausrichtungen um die Schwenkachse aufweist.

Die Erfindung ist nachfolgend anhand bevorzugter Ausführungsbeispiele unter Bezugnahme auf die Abbildungen noch eingehend veranschaulicht. Dabei zeigt:
- Fig. 1: ein erfindungsgemäßes Gartenschneidgerät in Seitenansicht,
- Fig. 2: Draufsichten auf das Gerät nach Fig. 1 in zwei unterschiedlichen Betriebsstellungen,
- Fig. 3: einen Einsatz des Geräts in der Betriebsstellung nach Fig. 2 (A).

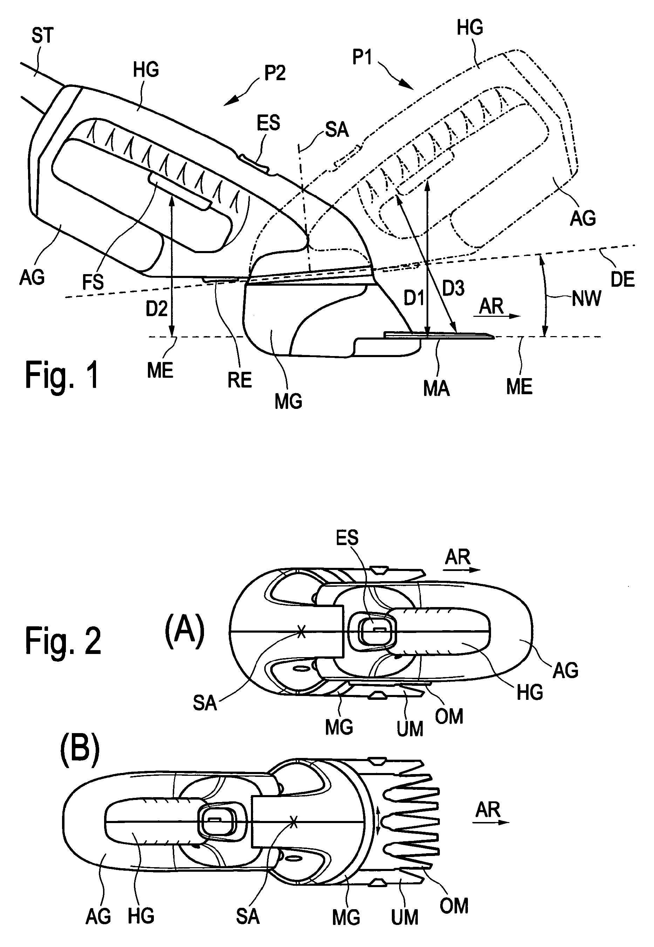

Fig. 1 zeigt in Seitenansicht ein erfindungsgemäßes Gartenschneidgerät in Form einer Busch-Schere. Diese besitzt in an sich gebräuchlicher Ausführung ein Motorgehäuse MG, in welchem ein Elektromotor angeordnet ist und an welchem eine Messeranordnung MA gehalten ist. Die Messeranordnung MA bestimmt eine Schneidebene ME relativ zu dem Motorgehäuse MG. Aus der Draufsicht auf eine zweite Betriebsstellung nach Fig. 2 (B) ist eine vorteilhafte Ausführung einer solchen Messeranordnung MA ersichtlich, bei welcher ein Untermesser UM relativ zu dem Motorgehäuse MG feststehend ist und ein Obermesser OM durch den im Motorgehäuse MG untergebrachten Motor um eine verdeckt angeordnete Messerachse oszillierend relativ zu dem Untermesser UM schwenkbar ist, wie durch den Doppelpfeil auf dem Obermesser OM angedeutet ist. In Fig. 2 ist eine Mittelstellung des Obermessers relativ zu dem Untermesser UM dargestellt, bezüglich welcher das Obermesser OM zu beiden Seiten einer Haupt-Arbeitsrichtung AR zwischen zwei äußersten Schwenkpositionen schwenkbar ist. Zwischen dem Obermesser und dem Untermesser, welche jeweils mehrere von der Messerachse weg gerichtete Zähne aufweisen, bestehen Lücken, in welche bei Bewegung des Geräts in Arbeitsrichtung AR Schnittgut eingleiten kann und welche bei der oszillierenden Bewegung des Obermessers alternierend geöffnet und geschlossen werden. Beim Schließen der Lücken wird durch die aufeinander zu bewegten Schneidkanten von Obermesser und Untermesser in den Lücken befindliches Schneidgut durchtrennt. Derartige Schneidgeräte sind in verschiedener Ausführung gebräuchlich.

Das Gerät kann von einem Benutzer mit einer Hand gehalten und für den Schneidvorgang geführt werden, wobei der Benutzer zugleich mit den Fingern seiner das Gerät haltenden und führenden Hand einen Schalter FS betätigt, mittels dessen der Antriebsmotor einschaltbar ist. Der Schalter FS ist aus Sicherheitsgründen gebräuchlicherweise mit einem weiteren Schaltelement ES gekoppelt, wobei zuerst das Schaltelement ES mit dem Daumen der Benutzerhand in eine Lösestellung verschoben wird, bevor über den Schalter FS der Motor aktiviert werden kann. Zusätzlich kann vorgesehen sein, dass mit dem Handgriff eine Stielaufnahme für einen Gerätestiel ST verbunden ist, um das Gerät in an sich bekannter Art in von dem Benutzer beabstandeter Position zu benutzen. An dem dem Gerät abgewandten Ende des Stiels ST ist ein die Schalter ES und FS überbrückender Schalter vorgesehen.

In Fig. 1 ist mit unterbrochener Linie eine erste Betriebsstellung P1 des Handgriffs HG und mit unterbrochener Linie eine zweite Betriebsstellung P2 des Handgriffs relativ zu dem Motorgehäuse MG und der Messeranordnung MA dargestellt. Die beiden Betriebsstellungen P1 und P2 seien als um 180°drehsymmetrisch bezüglich einer Schwenkachse SA angenommen. Vorzugsweise erfolgt ein Wechsel der Betriebsstellung des Handgriffs zwischen den beiden Betriebsstellungen P1 und P2 durch Verschwenken des Handgriffs um die Schwenkachse SA, wofür vorteilhafterweise zwischen Handgriff HG und Motorgehäuse MG ein Schwenkgelenk ausgebildet ist. Der Handgriff ist vorzugsweise in beiden dargestellten Betriebsstellungen relativ zu dem Motorgehäuse MG arretierbar. Die Arretierung kann beispielsweise über ein Entriegelungselement RE gelöst werden, wobei vorteilhafterweise ein solches Entriegelungselement RE von der Handposition der den Schalter FS betätigenden Benutzerhand so weit entfernt ist, dass der Benutzer zuerst die Hand vom Schalter FS lösen muss und damit der Antriebsmotor zum Stillstand kommt, bevor die Arretierung gelöst werden kann. Das Entriegelungselement kann in anderer vorteilhafter Ausführung auch an der Messeranordnung abgewandten Seite des Motorgehäuses angeordnet sein. In vorteilhafter Ausführung kann vorgesehen sein, dass ein Lösen der Arretierung nur möglich ist, wenn der Antriebsmotor ausgeschaltet ist und dass der Antriebsmotor nur eingeschaltet werden kann, wenn der Handgriff HG relativ zu dem Motorgehäuse MG arretiert ist. Der Handgriff HG ist vorzugsweise länglich zum Umgreifen mit einer Hand ausgebildet, wobei die Längsrichtung der länglichen Gestaltung in einer die Schwenkachse SA enthaltenden Ebene überwiegend radial bezüglich der Schwenkachse verläuft.

Die Schwenkachse SA ist in bevorzugter Ausführung gegen eine senkrecht auf der Schneidebene ME stehende Richtung geneigt. In Fig. 1 ist ein solcher Neigungswinkel NW eingezeichnet als ein Winkel zwischen der Schneidebene ME und einer Drehebene auf welcher die Schwenkachse SA senkrecht steht. Der Neigungswinkel NW beträgt vorteilhafterweise wenigstens 3°, insbesondere wenigstens 5° und maximal 20°, insbesondere maximal 10°. Durch die Neigung der Drehebene DE gegen die Schneidebene ME ergibt sich vorteilhafterweise in der ersten Betriebsstellung des Handgriffs ein Abstand D1 des Handgriffs von der Schneidebene, welcher größer ist als ein Abschnitt D2 des Handgriffs HG von der Schneidebene ME in der zweiten Betriebsstellung P2. Die Abstände D1 und D2 seien dabei jeweils als Abstände der Mitte des Schalters FS von der Schneidebene ME gemessen. Ein anderer Bezugspunkt innerhalb des Handgriffs ist offensichtlich äquivalent. Auch ein durch Sicherheitsbestimmungen vorgeschriebener Mindestabstand D3 des Schalters FS oder anderer Bereiche am Handgriff von den Schneiden der Messeranordnung kann durch die geneigte Ausrichtung der Schwenkachse auch in der ersten Betriebsposition P1 vorteilhaft eingehalten werden. Ein solcher Mindestabstand beträgt z. B. für Schalter bei Scheren der skizzierten Art 100 mm.

Vorteilhafterweise ist der Handgriff HG in einem größeren Griffgehäuse mit einem zusätzlichen Gehäuseteil AG fest verbunden und gemeinsam mit diesem zwischen den beiden Betriebsstellungen P1 und P2 verlagerbar, wobei ein solches weiteres Gehäuseteil AG zwischen dem Handgriff und der Schneidebene ME liegt. Insbesondere in der ersten Betriebsstellung P1 kann ein solches Gehäuseteil AG vorteilhaft einen Schutz der Benutzerhand gegen zu schneiden des Pflanzengut PS und gegen die Messeranordnung MA bilden. Der Gehäuseabschnitt AG kann in bevorzugter Ausführung zur Aufnahme eines Akkumulators als Energiequelle für einen Elektromotor als Antriebsmotor im Motorgehäuse MG dienen oder durch ein Akkumulatorgehäuse gebildet sein.

Die Neigung der Schwenkachse SA gegen die Richtung der Flächennormalen auf die Schneidebene ME bzw. die Neigung der Drehebene DE gegen die Schneidebene ME um den Neigungswinkel NW vergrößert vorteilhafterweise auch die Lücke zwischen der Schneidebene ME und dem Gehäuseabschnitt AG in der ersten Betriebsstellung P1.

In der ersten Betriebsstellung P1 weist der Handgriff HG bezüglich der Schwenkachse SA in Richtung der Messeranordnung, insbesondere in Richtung von deren Arbeitsrichtung AR. Dabei überlappt vorteilhafterweise in vertikaler Projektion auf die Schneidebene ME der Handgriff HG zumindest teilweise mit der Messeranordnung, wie aus der Ansicht nach Fig. 2 (A), deren Blickrichtung einer solchen Projektionsrichtung entspricht, anschaulich ersichtlich ist. Der Handgriff HG kann hierbei insbesondere von der Schwenkachse SA weg in der Projektion auch über die Messereinrichtung in der Arbeitsrichtung AR hinausragen. In der zweiten Betriebsstellung P2 ist der Handgriff auf der der Messeranordnung bezüglich der Schwenkachse SA abgewandten Seite angeordnet.

Zusätzlich zu den beiden skizzierten Betriebsstellungen mit um 180° bezüglich der Schwenkachse unterschiedlicher Ausrichtung des Handgriffs relativ zu der Messeranordnung können weitere Betriebsstellungen mit anderen Winkelausrichtungen um die Schwenkachse vorgesehen sein. Vorteilhafterweise ist in allen Betriebsstellungen der Abstand D3 zwischen Schalter FS am Handgriff und den Messerschneiden der Messeranordnung größer als 100 mm.

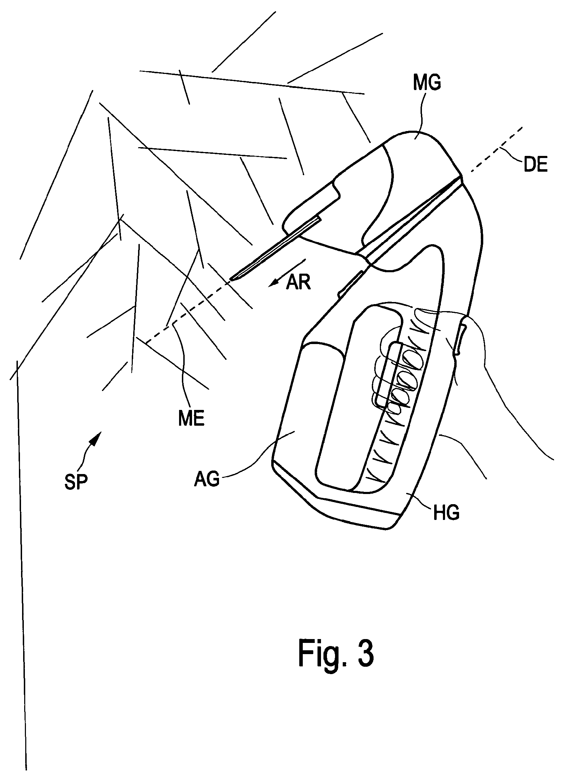

Fig. 3 zeigt eine Arbeitssituation mit einem Schneidgerät der in Fig. 1 und 2 dargestellten Art, wobei der Handgriff HG relativ zum Motorgehäuse MG die erste Betriebsstellung P1 nach der Darstellung mit unterbrochener Linie in Fig. 1 bzw. nach der Darstellung in Fig. 2 (A) einnimmt. Durch die Anordnung des Handgriffs HG relativ zum Motorgehäuse in dieser ersten Betriebsstellung ergibt sich eine vorteilhaft ergonomische Haltung des Geräts relativ zu dem zu schneidenden Pflanzengut SP in solchen Arbeitssituationen. Entsprechendes gilt insbesondere auch, wenn das Schneidgerät für höhere Arbeitspositionen an einem Stiel gehalten ist. Zugleich kann durch Verschwenken des Handgriffs in die zweite Betriebsstellung P2 das Gerät in gleicher Weise wie bekannte Geräte eingesetzt werden.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Gartenschneidgerät mit einem zur insbesondere einhändigen Handhabung des Gartengeräts ausgebildeten Handgriff und mit einer eine Schneidebene bestimmende Messeranordnung mit oszillierend relativ zueinander bewegbaren Messern und einem die Messerbewegung antreibenden Antriebsmotor, wobei der Handgriff relativ zu der Messeranordnung wenigstens zwei unterschiedliche Betriebsstellungen einnehmen kann, **dadurch gekennzeichnet, dass** der Handgriff (HG) zwischen den wenigstens zwei Betriebsstellungen um eine zumindest annähernd senkrecht zur Schneidebene ausgerichtete Schwenkachse (SA) verlagerbar ist und bezüglich der Schwenkachse in einer ersten Betriebsstellung (P1) in Richtung der Messeranordnung weist und in einer zweiten Betriebsstellung (P2) der Messeranordnung abgewandt ist.

2. Gartenschneidgerät nach Anspruch 1, **dadurch gekennzeichnet, dass** die erste und die zweite Betriebsstellung (P1, P2) um 180° um die Schwenkachse (SA) gegeneinander versetzt sind.

3. Gartenschneidgerät nach Anspruch 1 oder 2, **dadurch gekennzeichnet, dass** der Abstand (D1) des Handgriffs (HG) von der Schneidebene (ME) in der ersten Betriebsstellung (P1) größer ist als der Abstand (D2) in der zweiten Betriebsstellung (P2).

4. Gartenschneidgerät nach einem der Ansprüche 1 bis 3, **dadurch gekennzeichnet, dass** die Schwenkachse (SA) gegen die Flächennormale der Schneidebene um einen Neigungswinkel (NW) geneigt verläuft.

5. Gartenschneidgerät nach Anspruch 4, **dadurch gekennzeichnet, dass** der Neigungswinkel (NW) wenigstens 3°, insbesondere wenigstens 5° beträgt.

6. Gartenschneidgerät nach Anspruch 4 oder 5, **dadurch gekennzeichnet, dass** der Neigungswinkel maximal 20°, insbesondere maximal 10° beträgt.

7. Gartenschneidgerät nach einem der Ansprüche 1 bis 6, **dadurch gekennzeichnet, dass** der Handgriff (HG) in der ersten Betriebsstellung (P1) in Projektion senkrecht zur Schneidebene (ME) mit der Messeranordnung (MA) überlappt.

8. Gartenschneidgerät nach einem der Ansprüche 1 bis 7, **dadurch gekennzeichnet, dass** der Handgriff (HG) in der ersten Betriebsstellung in Projektion senkrecht zur Schneidebene (ME) von der Schwenkachse weg über die Messeranordnung (MA) hinausragt.

9. Gartenschneidgerät nach einem der Ansprüche 1 bis 8, **dadurch gekennzeichnet, dass** der Handgriff (HG) Teil eines Griffgehäuses ist, welches einen in der ersten Betriebsstellung zwischen Handgriff und Messeranordnung verlaufenden Gehäuseabschnitt (AG) aufweist.

10. Gartenschneidgerät nach einem der Ansprüche 1 bis 9, **dadurch gekennzeichnet, dass** der Handgriff länglich mit radial bezüglich der Schwenkachse verlaufender Längsrichtung ausgebildet ist.

11. Gartenschneidgerät nach einem der Ansprüche 1 bis 10, **dadurch gekennzeichnet, dass** der Handgriff für eine Griffposition mit dem Benutzerarm abgewandten Schwenkgelenk ausgebildet ist.

12. Gartenschneidgerät nach einem der Ansprüche 1 bis 11, **dadurch gekennzeichnet, dass** der Antriebsmotor in einem Motorgehäuse (MG) untergebracht ist, an welchem die Messeranordnung (MA) befestigt ist.

13. Gartenschneidgerät nach einem der Ansprüche 1 bis 12, **dadurch gekennzeichnet, dass** der Antriebsmotor ein Elektromotor ist.

14. Gartenschneidgerät nach Anspruch 13, **dadurch gekennzeichnet, dass** ein Akku als Energiequelle für den Antriebsmotor mit dem Handgriff in fester Zuordnung verbunden ist.

15. Gartenschneidgerät nach einem der Ansprüche 1 bis 14, **dadurch gekennzeichnet, dass** eine Verlagerung des Handgriffs zwischen verschiedenen Betriebsstellungen bei laufendem Antriebsmotor blockiert ist.

## Claims

1. A garden cutting device comprising a handle designed, in particular, for one-handed handling of the garden device, and comprising a blade arrangement which determines a cutting plane having moveable blades which oscillate relative to one another and a drive motor which drives the blade movement, wherein the handle can assume at least two different operating positions relative to the blade arrangement, **characterized in that** the handle (HG) is displaceable between the at least two operating positions about a pivot axis (SA) aligned at least approximately perpendicular to the cutting plane and, with respect to the pivot axis, faces in the direction of the blade arrangement in a first operating position (P1) and faces away from the blade arrangement in a second operating position (P2).

2. The garden cutting device according to Claim 1, **characterized in that** the first and second operation positions (P1, P2) are offset from one another by 180° about the pivot axis (SA).

3. The garden cutting device according to Claim 1 or 2, **characterized in that** the distance (D1) of the handle (HG) from the cutting plane (ME) in the first operating position (P1) is greater than the distance (D2) in the second operating position (P2).

4. The garden cutting device according to one of Claims 1 through 3, **characterized in that** the pivot axis (SA) extends at an angle of inclination (NW) to the surface normal of the cutting plane.

5. The garden cutting device according to Claim 4, **characterized in that** the angle of inclination (NW) is at least 3°, in particular, at least 5°.

6. The garden cutting device according to Claim 4 or 5, **characterized in that** the angle of inclination is maximally 20°, in particular, maximally 10°.

7. The garden cutting device according to one of Claims 1 through 6, **characterized in that**, in the first operating position (P1), the handle (HG) overlaps the blade arrangement (MA) in a projection perpendicular to the cutting plane (ME).

8. The garden cutting device according to one of Claims 1 through 7, **characterized in that**, in the first operating position, the handle (HG) protrudes from the pivot axis out beyond the blade arrangement (MA) in a projection perpendicular to the cutting plane (ME).

9. The garden cutting device according to one of Claims 1 through 8, **characterized in that** the handle (HG) is part of a grip housing which has a housing section (AG) extending between the handle and the blade arrangement in the first operating position.

10. The garden cutting device according to one of Claims 1 through 9, **characterized in that** the handle is designed as elongated with the longitudinal direction extending radially with respect to the pivot axis.

11. The garden cutting device according to one of Claims 1 through 10, **characterized in that** the handle is designed for a gripping position with the pivoting articulation facing away from the user's arm.

12. The garden cutting device according to one of Claims 1 through 11, **characterized in that** the drive motor is accommodated in a motor housing (MG) on which the blade arrangement (MA) is fixed.

13. The garden cutting device according to one of Claims 1 through 12, **characterized in that** the drive motor is an electric motor.

14. The garden cutting device according to Claim 13, **characterized in that** an accumulator is connected to the handle in a fixed assignment as the power source for the drive motor.

15. The garden cutting device according to one of Claims 1 through 14, **characterized in that** a displacement of the handle between different operating positions is blocked when the drive motor is running.

## Revendications

1. Sécateur de jardin avec une poignée conçue spécialement pour la manipulation à une main de l'instrument, avec un montage de lames déterminant un plan de découpe avec des lames oscillantes l'une par rapport à l'autre et un moteur qui entraîne le mouvement des lames, où la poignée peut admettre au moins deux positions de fonctionnement différentes par rapport au montage des lames, **caractérisé en ce que** la poignée (HG) est déplaçable entre les au moins deux positions de fonctionnement autour d'un axe de pivotement (SA) orienté presque perpendiculairement par rapport au plan de découpe et, dans une première position de fonctionnement (P1) s'aligne sur la direction de la position des lames et, dans une deuxième position de fonctionnement (P2), s'écarte de la position des lames.

2. Sécateur de jardin selon la revendication 1, **caractérisé en ce que** la première et la deuxième position de fonctionnement (P1, P2) sont à 180° l'une de l'autre autour de l'axe de pivotement (SA).

3. Sécateur de jardin selon la revendication 1 ou 2, **caractérisé en ce que** la distance (D1) de la poignée (HG) au plan de découpe (ME) dans la première position de fonctionnement (P1) est supérieure à la distance (D2) dans la deuxième position de fonctionnement (P2).

4. Sécateur de jardin selon l'une quelconque des revendications 1 à 3, **caractérisé en ce que** l'axe de pivotement (SA) est incliné par rapport à la normale au plan de découpe d'un angle d'inclinaison (NW).

5. Sécateur de jardin selon la revendication 4, **caractérisé en ce que** l'angle d'inclinaison (NW) est d'au moins 3°, en particulier d'au moins 5°.

6. Sécateur de jardin selon la revendication 4 ou 5, **caractérisé en ce que** l'angle d'inclinaison est de maximum 20°, en particulier de maximum 10°.

7. Sécateur de jardin selon l'une quelconque des revendications 1 à 6, **caractérisé en ce que** la poignée (HG) dans la première position de fonctionnement (P1) chevauche le montage des lames (MA) en projection perpendiculaire au plan de découpe (ME).

8. Sécateur de jardin selon l'une quelconque des revendications 1 à 7, **caractérisé en ce que** la poignée (HG) dans la première position de fonctionnement (P1) dépasse de l'axe de pivotement au dessus du montage des lames (MA) en projection perpendiculaire au plan de découpe (ME).

9. Sécateur de jardin selon l'une quelconque des revendications 1 à 8, **caractérisé en ce que** la poignée (HG) fait partie d'un bloc poignée qui présente une section (AG) dans la première position de fonctionnement entre la poignée et le montage des lames.

10. Sécateur de jardin selon l'une quelconque des revendications 1 à 9, **caractérisé en ce que** la poignée est disposée allongée dans la direction radiale par rapport à l'axe de pivotement.

11. Sécateur de jardin selon l'une quelconque des revendications 1 à 10, **caractérisé en ce que** la poignée est conçue pour une position de saisie avec une articulation pivotante éloignée du bras de l'utilisateur.

12. Sécateur de jardin selon l'une quelconque des revendications 1 à 11, **caractérisé en ce que** le moteur d'entraînement est logé dans un bloc moteur (MG) auquel est fixé le montage des lames (MA).

13. Sécateur de jardin selon l'une quelconque des revendications 1 à 12, **caractérisé en ce que** le moteur d'entraînement est un moteur électrique.

14. Sécateur de jardin selon l'une quelconque des revendications 1 à 13, **caractérisé en ce qu'**un accumulateur est relié fermement à la poignée comme source d'énergie pour le moteur d'entraînement.

15. Sécateur de jardin selon l'une quelconque des revendications 1 à 14, **caractérisé en ce que** tout déplacement de la poignée entre différentes positions de fonctionnement est bloqué lorsque le moteur d'entraînement fonctionne.
